# EUROPEAN PATENT SPECIFICATION

(11) **EP 3 979 594 B1**
(45) Date of publication and mention of the grant of the patent: **11.12.2024**
(21) Application number: 20871853.6
(22) Date of filing: 01.09.2020
(51) Int. Cl.: H04L 67/56, H04L 67/141, H04L 69/163, H04L 69/326, H04L 67/5681, H04L 67/5682, H04L 9/40, H04L 69/16

(54) **PACKET FORWARDING METHOD AND APPARATUS FOR HETEROGENEOUS NETWORK**
VERFAHREN UND VORRICHTUNG ZUR PAKETWEITERLEITUNG FÜR EIN HETEROGENES NETZWERK
PROCÉDÉ ET APPAREIL DE RÉACHEMINEMENT DE PAQUETS POUR RÉSEAU HÉTÉROGÈNE

(30) Priority: 30.09.2019 CN 201910942239
(43) Date of publication of application: 06.04.2022
(73) Proprietor: ZTE Corporation, Shenzhen, Guangdong 518057 (CN)
(72) Inventor: JIN, Hao, Shenzhen, Guangdong 518057 (CN); TU, Yaofeng, Shenzhen, Guangdong 518057 (CN); GUO, Bin, Shenzhen, Guangdong 518057 (CN); HAN, Yinjun, Shenzhen, Guangdong 518057 (CN); XU, Junning, Shenzhen, Guangdong 518057 (CN)
(74) Representative: Novagraaf Technologies
(86) International application number: PCT/CN2020/112864
(87) International publication number: WO 2021/063147

(56) References cited:
- EP-A1- 2 991 409
- CN-A- 103 840 994
- CN-A- 105 245 271
- CN-A- 108 737 413
- CN-A- 109 547 519
- US-A1- 2009 296 685
- ANONYMOUS: "BSDCan2014: Userspace Networking with libuinet", 16 September 2017 (2017-09-16), pages 1 - 2, XP055938499, Retrieved from the Internet <URL:https://web.archive.org/web/20170916064519/https://www.bsdcan.org/2014/schedule/events/447.en.html> [retrieved on 20220705]
- KELSEY PATRICK: "libuinet TheFreeBSDTCP/IPStackasaUserlandLibrary,PlusExtras", 16 March 2014 (2014-03-16), pages 1 - 33, XP055938501, Retrieved from the Internet <URL:https://www.bsdcan.org/2014/schedule/attachments/260_libuinet_bsdcan2014.pdf> [retrieved on 20220705]
- ANDREA ROSS: "Userspace Networking with libuinet", 26 May 2014 (2014-05-26), XP055939019, Retrieved from the Internet <URL:https://www.youtube.com/watch?v=LhIx8q8_7YY&list=PL2BmtSoZtRyBzTDkJRt3nXZOnj12vXQ3c&index=6> [retrieved on 20220706]
- MU, RUICHUAO: ""Research and Implementation of High Performance VPN Gateway Based on DPDK"", MASTER'S THESIS OF HARBIN ENGINEERING UNIVERSITY, 15 February 2018 (2018-02-15), pages 1 - 82, XP055798095
- DENG, GENGSHENG ET AL.: "Application Research on Dual Stack Reverse Proxy Technology in IPv6 Transition Phase)", CHINA EDUCATION NETWORK, 31 January 2018 (2018-01-31), pages 39 - 42, XP055798099

## Description

### Technical Field

The present application relates to the field of communication technology, and in particular to a packet forwarding method and apparatus for a heterogeneous network.

### Background

A network at the network server side is very stable and supports user requests at high concurrency and high throughput. A wireless mobile network has inherent transmission characteristics, such as disorder of packet forwarding, incapability of accurately and timely identifying packet loss, and resource shortage in busy time. When the above situations occur, the Internet access rate of the user changes rapidly, which influences the Internet access experience of mobile users.

A proxy technology in related art is mainly based on forward proxy technology and reverse proxy technology. Transmission Control Protocol (TCP) connections are respectively established between a proxy service and two ends of communication, that is, the proxy service needs to establish the TCP connection with both an access client and a server, and then interactively forwards data at a session layer. The forward proxy technology is non-transparent to the client, and the reverse proxy technology is non-transparent to the server. D1(CN 108737413A) relates to data processing method, device and user state protocol stack of transport layer; D2(XP 055938499) relates to "Userspace Networking with libuinet"; D3(XP 055938501) relates to "libuinet:The FreeBSD TCP/IP Stack as a Userland Library, Plus Extras"; D4(XP 055939019) relates to "Userspace Networking with libuinet"; D5(CN 105245271 A) relates to a satellite communicating network acceleration device and method.

### Summary

The technical problem to be solved by embodiments of the present application is to realize a transparent proxy service between a client and a server, and solve the problem that the forwarding performance is influenced due to multiple copies of data between a user mode and a kernel mode in the proxy service. The embodiments of the present application provide a packet forwarding method and apparatus for a heterogeneous network.

The present application is set out in the appended set of claims.

A packet forwarding method for a heterogeneous network according to the embodiments of the present application is provided in independent claim 1. Further embodiments of the method are provided in dependent claims 2-9.

The embodiments of the present application also provide a computer-readable storage medium, in which a program for implementing information transfer is stored. The program, when executed by a processor, implements the operations of the above packet forwarding method for a heterogeneous network.

According to the computer-readable storage medium in the embodiments of the present application, by means of running the packet forwarding method for a heterogeneous network, packet forwarding can be completed in a transport layer of a proxy node, and the problem of a bottleneck in proxy service performance caused by multiple copies of a packet in a user mode and a kernel mode during a forwarding process can be avoided, thereby realizing packet zero-copy forwarding based on a user mode protocol stack, and effectively improving the system performance. Moreover, according to the packet forwarding method in the present application, there is no need to fake a man-in-the-middle and there is no risk of a man-in-the-middle attack, and encryption transmission of TLS, etc. is supported, thereby improving the security and reliability of packet forwarding.

The embodiments of the present application also provide a proxy node device, which includes: a memory, a processor and a computer program which is stored on the memory and capable of running on the processor. The computer program, when executed by the processor, implements the operations of the above packet forwarding method for a heterogeneous network.

According to the proxy node device in the embodiments of the present application, packet forwarding can be completed in a transport layer of a proxy node, thereby avoiding the problem of a bottleneck in proxy service performance caused by multiple copies of a packet in a user mode and a kernel mode during a forwarding process.

### Brief Description of the Drawings

Fig. 1 is a schematic diagram of a proxy service in the related art.
Fig. 2 is a schematic diagram of a packet forwarding apparatus for a heterogeneous network according to some embodiments of the present application.
Fig. 3 is a schematic diagram of a packet forwarding apparatus for a heterogeneous network according to some embodiments of the present application.
Fig. 4 is a flowchart of a packet forwarding apparatus for a heterogeneous network according to some embodiments of the present application.
Fig. 5 is a flowchart of establishing a connection between a client and a server according to some embodiments of the present application.
Fig. 6 is a flowchart of a packet interaction method for a heterogeneous network according to some embodiments of the present application.

### Detailed Description of the Embodiments

In order to further elaborate the technical means adopted by the embodiments of the present application to achieve a predetermined purpose and the efficacy thereof, the present application is described in detail below in combination with the accompanying drawings and exemplary embodiments.

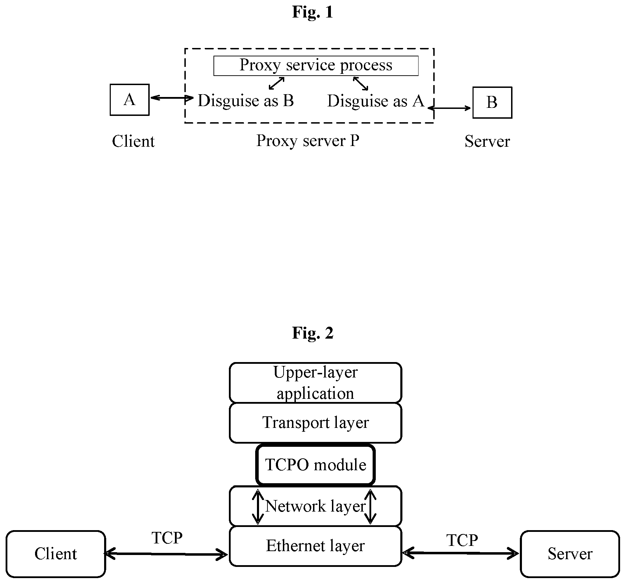

As shown in Fig. 1, in the related art, a proxy service between a client A and a server B is a pseudo-transparent technology, for example, haproxy. The proxy process is described in detail as follows.

The client A initiates a link establishment request to the server B, and a proxy server P intercepts the link establishment request and disguises itself as the server B to complete three-way handshake with the client A.

When the client A initiates a service request, the proxy server P disguises itself as the client A to establish a link with the server B, and initiates a request.

The server B sends a response message to the proxy server P, a proxy server process receives the response message and searches for a link of the client A; and the proxy server P finds the corresponding link and disguises itself as the server B to send the response message to the client A.

In the above technical solution, the proxy server P is transparent to both the client A and the server B, but still needs to establish a link with the client A and the server B respectively, and there is a risk of a man-in-the-middle attack, so encryption channels such as TLS and HTTP Security (HTTPS) cannot be supported. Moreover, during a forwarding process, data flows need to be received to an application layer and sent from the application layer to a destination node, and multiple copies are made between a kernel mode and a user mode, so there is a performance bottleneck.

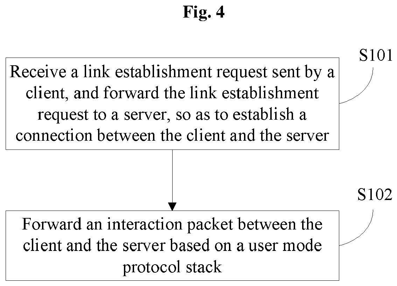

As shown in Fig. 2 and Fig. 4, a packet forwarding method for a heterogeneous network according to some embodiments of the present application includes the following operations S101 and S102.

At S101, a link establishment request sent by a client is received, and the link establishment request is sent to a server, so as to establish a connection between the client and the server.

At S102, an interaction packet is forwarded between the client and the server based on a user mode protocol stack.

It is to be noted that in the present application, as shown in Fig. 2, there is a proxy node set between the client and the server. The proxy node is configured to forward an interaction packet between the client and the server. Moreover, the proxy node in the embodiments of the present application completes packet forwarding through a transport layer. Therefore, the proxy node can realize a transparent proxy service and packet forwarding based on the user mode protocol stack.

According to the packet forwarding method for a heterogeneous network in the embodiments of the present application, by means of completing packet forwarding in a transport layer, the problem of a bottleneck in proxy service performance caused by multiple copies of a packet in a user mode and a kernel mode during a forwarding process can be avoided, thereby realizing packet zero-copy forwarding based on a user mode protocol stack, and effectively improving the system performance. Moreover, according to the packet forwarding method in the present application, there is no need to fake a man-in-the-middle and there is no risk of a man-in-the-middle attack, and encryption transmission of TLS, etc. is supported, thereby improving the security and reliability of packet forwarding.

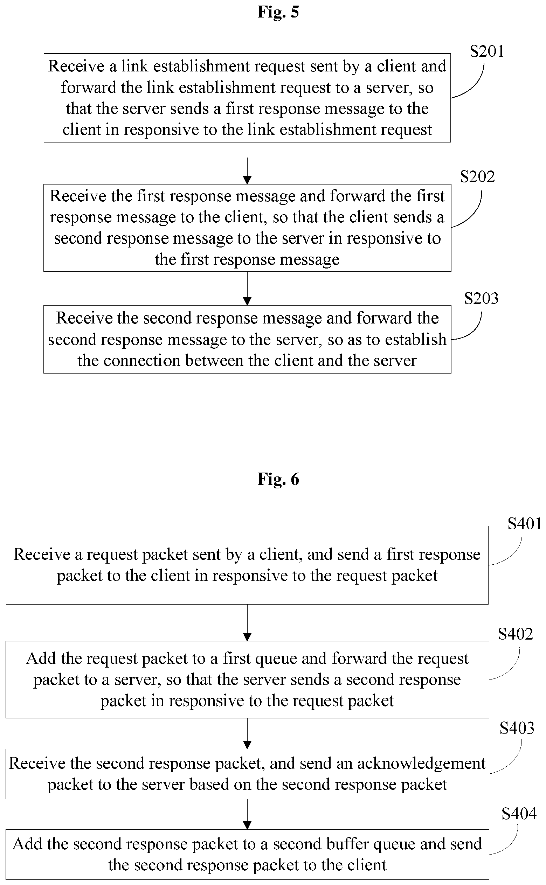

As shown in Fig. 5, according to some embodiments of the present application, the operation that the link establishment request and the response message are forwarded between the client and the server includes the following operations S201 to S203.

At S201, the link establishment request sent by the client is received and forwarded to the server, so that the server sends a first response message to the client in responsive to the link establishment request.

At S202, the first response message is received and forwarded to the client, so that the client sends a second response message to the server in responsive to the first response message.

At S203, the second response message is received and forwarded to the server, so as to establish the connection between the client and the server.

It is to be noted that the "link establishment request" here may be an SYN request, and the "first response message" and "second response message" may be ACK packets. For example, the client may send the SYN request to the server through the proxy node, after receiving the SYN request, the server sends the ACK packet to the client through the proxy node, and after receiving the ACK packet, the client sends the ACK packet to the server through the proxy node, so as to complete three-way handshake between the client and the server to establish a TCP connection between the client and the server.

In some embodiments of the present application, the operation that the link establishment request sent by the client is received and forwarded to the server includes the following operations.

The link establishment request sent by the client is received according to a preset default route.

A session is created based on the link establishment request, and the link establishment request is forwarded to the server after an address of the link establishment request is updated.

According to some embodiments of the present application, message contents of the session include: a link serial number and a window size.

It is to be noted that there is a TCP Optimizer (TCPO) module set between a transport layer and a network layer of the proxy node, which is configured to bidirectionally forward a TCP packet. For example, when a client UE wants to establish a link with a WEB server SP, the client UE first initiates an SYN request with a target port of 80 to the WEB server, and configures a default route to direct the SYN request to an intermediate proxy node. The proxy node configures a forwarding rule of sending the TCP packet with the target port of 80 to a protocol stack, and an IP layer sends the packet to be processed to the TCPO module. The TCPO module creates a session, records the serial number of a new TCP link, a window size and other information, and updates an MAC address according to a routing address and then sends the packet through a network adapter. For example, when the client sends a packet to the server, the TCPO module updates the MAC address of the client to the MAC address of the proxy node according to the routing address and sends the packet to the server through the network adapter. A source IP and a port of a link establishment packet received by the server are from the client UE, so as to send an SYN+ACK packet to the client UE.

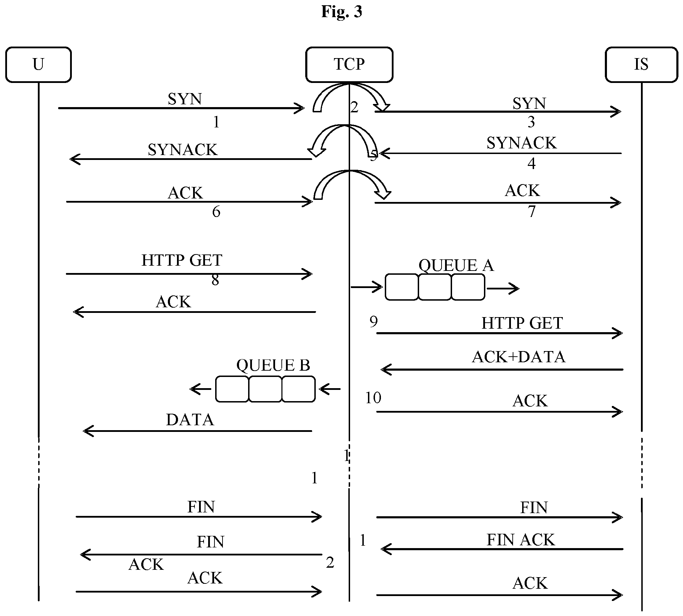

As shown in Fig. 3 and Fig. 6, in some embodiments of the present application, the operation that an interaction packet is forwarded between the client and the server based on the user mode protocol stack includes the following operations S401 to S404.

At S401, a request packet sent by the client is received, and a first response packet is sent to the client in responsive to the request packet.

At S402, the request packet is added to a first queue and forwarded to the server, so that the server sends a second response packet in responsive to the request packet.

At S403, the second response packet is received, and an acknowledgement packet is sent to the server based on the second response packet.

At S404, the second response packet is added to a second buffer queue and sent to the client.

It is to be noted that, as shown in Fig. 3, after the three-way handshake is completed to establish a connection between the client and the server, the client may send a request packet to the server. The preset default route directs the request packet to the proxy node. The TCPO module of the proxy node receives the request packet, adds the request packet to a buffer queue A to forward the request packet to the server, and sends an ACK packet to the client. After receiving the second response packet from the server, the TCPO module adds the second response packet to a queue B to forward the second response packet to the client, and sends the ACK packet to the server to confirm that data is received.

According to some embodiments of the present application, the method further includes that: in a case where a data capacity of the second response packet in the second buffer queue is greater than a threshold, a window size of the request packet sent to the server is reduced, so as to reduce a packet sending rate of the server. As shown in Fig. 3, when the network at the client side causes too much backlogged data in buffer queue B, the size of an announcement window sent to the server can be reduced to inform the server to reduce a data transmission rate. Thus, the optimization during the packet interaction process is realized, and the problems of congestion, packet loss, etc. are effectively avoided.

In some embodiments of the present application, the method further includes that: in a case where the client does not receive the second response packet within a predetermined period of time, the second response packet is added to the second buffer queue again and sent to the client. As shown in Fig. 3, the data in the buffer queue B is dequeued one by one, and a data packet is forwarded to the client. When receiving the ACK packet, the proxy node may delete immediately the corresponding packet in the queue. A retransmission timer may be set. If the client does not receive the data packet within a predetermined period of time, the client may retransmit the response packet. Thus, the problem of packet loss is effectively avoided.

According to some embodiments of the present application, the method further includes that: in a case where packet loss is detected during the packet interaction process, a window size of the interaction packet is adjusted to a preset threshold. It is to be noted that the "preset threshold" here may be a "slow start threshold". The slow start threshold may be understood as the maximum value of slow start in a packet sending process. By means of adjusting the window size to be the same as the slow start threshold, it is possible to skip a slow start phase and enter a congestion avoidance phase directly, so that the packet interaction process between the client and the server is optimized and accelerated.

As shown in Fig. 2 and Fig. 3, a packet forwarding apparatus for a heterogeneous network according to some embodiments of the present application includes a forwarding module. The forwarding module may be the TCPO module and is configured to forward a link establishment request and a response message between a client and a server, establish a connection between the client and the server, and forward an interaction packet between the client and the server based on a user mode protocol stack.

According to the packet forwarding apparatus for a heterogeneous network in the embodiments of the present application, by means of completing packet forwarding in a transport layer by the forwarding module, the problem of a bottleneck in proxy service performance caused by multiple copies of a packet in a user mode and a kernel mode during a forwarding process can be avoided, thereby realizing packet zero-copy forwarding based on a user mode protocol stack, and effectively improving the system performance. Moreover, according to the packet forwarding apparatus in the present application, there is no need to fake a man-in-the-middle and there is no risk of a man-in-the-middle attack, and encryption transmission of TLS, etc. is supported, thereby improving the security and reliability of packet forwarding.

In a computer-readable storage medium according to the embodiments of the present application, a program for implementing information transfer is stored. The program, when executed by a processor, implements the operations of the above packet forwarding method for a heterogeneous network.

According to the computer-readable storage medium in the embodiments of the present application, by means of running the packet forwarding method for a heterogeneous network, packet forwarding can be completed in a transport layer of a proxy node, and the problem of a bottleneck in proxy service performance caused by multiple copies of a packet in a user mode and a kernel mode during a forwarding process can be avoided, thereby realizing packet zero-copy forwarding based on a user mode protocol stack, and effectively improving the system performance. Moreover, according to the packet forwarding method in the present application, there is no need to fake a man-in-the-middle and there is no risk of a man-in-the-middle attack, and encryption transmission of TLS, etc. is supported, thereby improving the security and reliability of packet forwarding.

A proxy node device according to the embodiments of the present application includes: a memory, a processor and a computer program which is stored on the memory and capable of running on the processor. The computer program, when executed by the processor, implements the operations of the above packet forwarding method for a heterogeneous network.

According to the proxy node device in the embodiments of the present application, packet forwarding can be completed in the transport layer of the proxy node device, and the problem of a bottleneck in proxy service performance caused by multiple copies of a packet in a user mode and a kernel mode during a forwarding process can be avoided, thereby realizing packet zero-copy forwarding based on a user mode protocol stack, and effectively improving the system performance. Moreover, according to the packet forwarding method in the present application, there is no need to fake a man-in-the-middle and there is no risk of a man-in-the-middle attack, and encryption transmission of TLS, etc. is supported, thereby improving the security and reliability of packet forwarding.

It is to be noted that Intel launches a Data Plane Development Kit (DPDK) project, which supports sending and receiving of user mode network packets. At present, a DPDK sending and receiving framework is mainly used for packet forwarding between network devices. In the embodiments of the present application, the DPDK is used as the sending and receiving framework of a transparent proxy server, and a TCP/IP open source protocol stack of Berkeley Software Distribution (BSD) is used as the user mode protocol stack. Other user mode protocol stack frameworks may also be used.

Taking that a mobile phone user accesses web pages through a browser as an example, the packet forwarding method and apparatus for a heterogeneous network according to the embodiments of the present application are introduced below. As shown in Fig. 2 and Fig. 3, a proxy node is embedded between a User End (UE) and a Service Provider (SP), transparent packet forwarding is realized based on a DPDK+user mode TCP/IP protocol stack, and a TCP protocol stack is optimized and accelerated according to the transmission characteristics of wireless networks, so as to improve the Internet access experience of mobile users. As shown in Fig. 2 and Fig. 3, the specific process is described as follows.

A client UE initiates an SYN request with a target port of 80 to a WEB server SP, and configures a default route to direct the SYN request to an intermediate proxy node.

The proxy node configures a forwarding rule of forwarding the TCP packet with a target port of 80 to a protocol stack, and the IP layer sends the packet to be processed by the TCPO module to the TCPO module.

The TCPO module creates a session, records the serial number of a new TCP link, a window size and other information, and updates the MAC address according to the routing address and then sends the packet through the network adapter.

The source IP and the port of the link establishment packet received by the SP are from the client UE, so the SYN+ACK packets are sent to the UE.

The proxy node forwards the packet from the SP to the TCPO module, and the TCPO module forwards the SYN+ACK packets to the UE.

The UE receives the SYN+ACK packet and sends the ACK packet, the SP receives the ACK packet, and the UE completes the three-way handshake with SP.

The client UE sends a GET request to the TCPO module.

The TCPO module receives the data packet, enqueues the data packet in the buffer queue A, sends the ACK packet to the UE, and forwards the request packet to the SP.

The TCPO module receives the response packet sent by the SP, enqueues the response packet in the buffer queue B, and sends an ACK packet to the SP to confirm reception of the data. If the network at the UE side causes much backlogged data in queue B, the size of the announcement window sent to the SP is reduced, and the SP is informed to reduce the data transmission rate.

The data packets in the buffer queue B are dequeued one by one and forwarded to the client. A retransmission timer is set, and if the timer times out, the specified packet is retransmitted, and the packet in the queue is deleted immediately after the ACK is received.

The UE breaks the link actively. The TCPO transmits transparently a handshake packet for four times, and breaks the link with the SP.

After receiving a link breaking request from the SP, if there are backlogged messages in the queue B, the TCPO disguises itself as the UE to break the link with the SP, and then breaks the link with the UE after the data in the queue B is sent completely.

Realizing the packet forwarding between the client and the server by means of the above proxy node has the following advantages.
(1) Fully transparent proxy: as shown in Fig. 2, the proxy node forwards the packet at the TCP layer, and modifies a physical address at the IP layer. The process of transparent transmission of the three-way handshake can save a complete handshake process compared with the traditional proxy process. The TCPO module is inserted between L3 (network layer) and L4 (transport layer) of the user mode TCP/IP protocol stack to implement a transparent proxy function. The UE initiates a request which is routed to the proxy server by default, the request is forwarded directly to the network of the SP when passing through the TCPO module, the source and target IP addresses remain unchanged, and an L2 (Ethernet layer) address is filled in based on the actual route. The packet sent from the SP to the UE is forwarded to the UE through the TCPO. The proxy server forwards the TCP packet only, and does not perform packet assembly and disassembly. Copying, reading and writing of the packet are not involved, there is no need to establish a link with the UE and the SP, therefore there is no risk of a man-in-the-middle attack, and encryption transmission of TLS, etc. is supported.
(2) TCP acceleration optimization: the TCPO module of the transparent proxy node divides the TCP connection between the UE and the SP into two segments, and flexibly controls the size of the announcement window; the TCPO module modifies the size of the announcement window according to the length of the buffer queue to control the data transmission rate of a source end. The TCPO module optimizes the TCP packet forwarding performance by means of buffering, congestion control and other mechanisms based on the transmission characteristics of the wireless network environment and the behavior characteristics of mobile users, thereby reducing the decrease of Internet access rate caused by wireless transmission disorder, packet loss and other situations, and improving the Internet access experience of 2G/3G/4G mobile users.
(3) Support of segmented link breaking: a node that breaks a link actively breaks the link immediately, and the other side waits for the data to be sent completely before breaking the link.
(4) Bidirectional data buffering: after the ACK is received, the data packet is deleted from the buffer queue to realize data buffering.
(5) Support of retransmission timeout: the data packet is retransmitted from the buffer queue without the need of retransmitting the data from the original sender.
(6) Flexible congestion control: after packet loss is detected, the initial size of a congestion window is set to the same value as the slow start threshold, and the slow start phase is skipped and the congestion avoidance phase is entered directly.
(7) Support of packet sorting: out-of-order packets do not influence packet forwarding of the proxy node.

To sum up, according to the proxy schemes provided in the embodiments of the present application, by embedding the TCPO module, which is configured to forward bidirectionally the TCP packet, in the user mode TCP/IP protocol stack, fully transparent proxy is realized, TCP optimization logic is added, and the network experience of the client is improved. Thus, not only the performance bottleneck of the traditional proxy server is solved, but also an open framework is provided for TCP optimization, thereby ensuring the stability and reliability of the native protocol stack as well as facilitating the implementation of customized policies for services.

It is apparent that those having ordinary skill in the art should appreciate that the above modules and operations of the embodiments of the present application may be implemented by a general-purpose computing device, and they may be centralized in a single computing device or distributed on a network composed of multiple computing devices. The above modules and operations may be implemented by a program code which is capable of being executed by the computing device, so that they may be stored in a storage device and executed by the computing device. In some situations, the presented or described operations may be executed in an order different from that described here; or they are made into integrated circuit modules, respectively; or multiple modules and operations of them are made into a single integrated circuit module for implementation. Therefore, the present application is not limited to any particular combination of hardware and software.

By means of the description of the exemplary implementations, it shall be possible to gain a deeper and specific understanding of the technical means adopted in the embodiments of the present application to achieve a predetermined purpose and the efficacy thereof. However, the accompanying drawings are only for reference and illustration purposes and are not intended to limit the present application The scope of protection of the present application is therefore defined in the appended claims.

## Claims

1. A packet forwarding method for a heterogeneous network, performed by a proxy node device and comprising:
receiving a link establishment request sent by a client, and forwarding the link establishment request to a server, so as to establish a connection between the client and the server (S101); and
forwarding an interaction packet between the client and the server based on a user mode protocol stack (S102), wherein the interaction packet is forwarded through a transport layer;
**characterized in that**
forwarding an interaction packet between the client and the server based on a user mode protocol stack comprises: receiving a request packet sent by the client, and sending a first response packet to the client in response to the request packet (S401), wherein the first response packet is an acknowledgement packet; adding the request packet to a first buffer queue and forwarding the request packet to the server, so that the server sends a second response packet in response to the request packet (S402); receiving the second response packet, and sending an acknowledgement packet to the server based on the second response packet (S403); and adding the second response packet to a second buffer queue and sending the second response packet to the client (S404).

2. The packet forwarding method for a heterogeneous network according to claim 1, wherein establishing a connection between the client and the server comprises:
receiving the link establishment request sent by the client and forwarding the link establishment request to the server, so that the server sends a third response message to the client in responsive to the link establishment request (S201);
receiving the third response message and forwarding the third dr# response message to the client, so that the client sends a fourth response message to the server in response to the third response
message (S202); and
receiving the fourth response message, and forwarding the fourth response message to the server, so as to establish the connection between the client and the server (S203).

3. The packet forwarding method for a heterogeneous network according to claim 2, wherein receiving the link establishment request sent by the client and forwarding the link establishment request to the server comprises:
receiving the link establishment request sent by the client according to a preset default route; and
creating a session based on the link establishment request, and forwarding the link establishment request to the server after updating an address of the link establishment request.

4. The packet forwarding method for a heterogeneous network according to claim 3, wherein message contents of the session comprise: a link serial number and a window size.

5. The packet forwarding method for a heterogeneous network according to claim 1, further comprising:
in a case where a data capacity of the second response packet in the second buffer queue is greater than a threshold, reducing a window size of the request packet sent to the server, so as to reduce a packet sending rate of the server.

6. The packet forwarding method for a heterogeneous network according to claim 1, further comprising:
in a case where the client does not receive the second response packet within a predetermined period of time, adding the second response packet to the second buffer queue again and sending the second response packet to the client.

7. The packet forwarding method for a heterogeneous network according to claim 1, further comprising:
in a case where packet loss is detected during a packet interaction process, adjusting a window size of the interaction packet to a preset threshold.

8. The packet forwarding method for a heterogeneous network according to claim 1, wherein a Transmission Control Protocol/Internet Protocol, TCP/IP open source protocol stack of Berkeley Software Distribution, BSD, is used as the user mode protocol stack.

9. The packet forwarding method for a heterogeneous network according to claim 1, further comprising:
after receiving a link breaking request from the server, if there are backlogged messages in the second buffer queue, disguising as the client to break the link with the server, and then breaking the link with the client after messages in the second buffer queue are sent completely.

10. A computer-readable storage medium, in which a program for implementing information transfer is stored, wherein the program, when executed by a processor, implements the operations of the packet forwarding method for a heterogeneous network according to any one of claims 1 to 9.

11. A proxy node device, comprising: a memory, a processor and a computer program which is stored on the memory and capable of running on the processor, wherein the computer program, when executed by the processor, implements the operations of the packet forwarding method for a heterogeneous network according to any one of claims 1 to 9.

## Patentansprüche

1. Paketweiterleitungsverfahren für ein heterogenes Netzwerk, das von einer Proxy-Knotenvorrichtung durchgeführt wird, und umfassend:
Empfangen einer Verbindungsherstellungsanforderung, die von einem Client gesendet wird, und Weiterleiten der Verbindungsherstellungsanforderung an einen Server, um eine Verbindung zwischen dem Client und dem Server herzustellen (S101); und
Weiterleiten eines Interaktionspakets zwischen dem Client und dem Server basierend auf einem Benutzermodus-Protokollstapel (S102), wobei das Interaktionspaket durch eine Transportschicht weitergeleitet wird;
**dadurch gekennzeichnet, dass**
das Weiterleiten eines Interaktionspakets zwischen dem Client und dem Server basierend auf einem Benutzermodus-Protokollstapel umfasst: Empfangen eines Anforderungspakets, das von dem Client gesendet wird, und Senden eines ersten Antwortpakets an den Client als Antwort auf das Anforderungspaket (S401), wobei das erste Antwortpaket ein Bestätigungspaket ist; Hinzufügen des Anforderungspakets zu einer ersten Pufferwarteschlange und Weiterleiten des Anforderungspakets an den Server, sodass der Server ein zweites Antwortpaket als Antwort auf das Anforderungspaket (S402) sendet; Empfangen des zweiten Antwortpakets und Senden eines Bestätigungspakets an den Server basierend auf dem zweiten Antwortpaket (S403); und Hinzufügen des zweiten Antwortpakets zu einer zweiten Pufferwarteschlange und Senden des zweiten Antwortpakets an den Client (S404).

2. Paketweiterleitungsverfahren für ein heterogenes Netzwerk nach Anspruch 1, wobei das Herstellen einer Verbindung zwischen dem Client und dem Server umfasst:
Empfangen der Verbindungsherstellungsanforderung, die von dem Client gesendet wird, und Weiterleiten der Verbindungsherstellungsanforderung an den Server, sodass der Server dritte Antwortnachricht an den Client als Antwort auf die Verbindungsherstellungsanforderung (S201) sendet;
Empfangen der dritten Antwortnachricht und Weiterleiten der dritten Antwortnachricht an den Client, sodass der Client eine vierte Antwortnachricht an den Server als Antwort auf die dritte Antwortnachricht (S202) sendet; und
Empfangen der vierten Antwortnachricht und Weiterleiten der vierten Antwortnachricht an den Server, um die Verbindung zwischen dem Client und dem Server herzustellen (S203).

3. Paketweiterleitungsverfahren für ein heterogenes Netzwerk nach Anspruch 2, wobei das Empfangen der Verbindungsherstellungsanforderung, die von dem Client gesendet wird, und das Weiterleiten der Verbindungsherstellungsanforderung an den Server umfasst:
Empfangen der Verbindungsherstellungsanforderung, die von dem Client gesendet wird, gemäß einer voreingestellten Standardroute; und
Erstellen einer Sitzung basierend auf der Verbindungsherstellungsanforderung und Weiterleiten der Verbindungsherstellungsanforderung an den Server nach dem Aktualisieren einer Adresse der Verbindungsherstellungsanforderung.

4. Paketweiterleitungsverfahren für ein heterogenes Netzwerk nach Anspruch 3, wobei der Nachrichteninhalt der Sitzung umfasst: eine Verbindungsseriennummer und eine Fenstergröße.

5. Paketweiterleitungsverfahren für ein heterogenes Netzwerk nach Anspruch 1, ferner umfassend:
in einem Fall, in dem eine Datenkapazität des zweiten Antwortpakets in der zweiten Pufferwarteschlange größer als ein Schwellenwert ist, Reduzieren einer Fenstergröße des Anforderungspakets, das an den Server gesendet wird, um eine Paketsenderate des Servers zu reduzieren.

6. Paketweiterleitungsverfahren für ein heterogenes Netzwerk nach Anspruch 1, ferner umfassend:
in einem Fall, in dem der Client das zweite Antwortpaket nicht innerhalb einer vorherbestimmten Zeitspanne empfängt, erneutes Hinzufügen des zweiten Antwortpakets zu der zweiten Pufferwarteschlange und Senden des zweiten Antwortpakets an den Client.

7. Paketweiterleitungsverfahren für ein heterogenes Netzwerk nach Anspruch 1, ferner umfassend:
in einem Fall, in dem während eines Paketinteraktionsprozesses ein Paketverlust erkannt wird, Anpassen einer Fenstergröße des Interaktionspakets auf einen voreingestellten Schwellenwert.

8. Paketweiterleitungsverfahren für ein heterogenes Netzwerk nach Anspruch 1, wobei ein Transmission Control Protocol/Internet Protocol, TCP/IP, Open Source-Protokollstapel von Berkeley Software Distribution, BSD, als Benutzermodus-Protokollstapel verwendet wird.

9. Paketweiterleitungsverfahren für ein heterogenes Netzwerk nach Anspruch 1, ferner umfassend:
falls, nach dem Empfang einer Verbindungsunterbrechungsanforderung von dem Server, es rückständige Nachrichten in der zweiten Pufferwarteschlange gibt, Maskieren als Client, um die Verbindung mit dem Server zu unterbrechen, und dann Unterbrechen der Verbindung mit dem Client, nachdem die Nachrichten in der zweiten Pufferwarteschlange vollständig gesendet sind.

10. Computerlesbares Speichermedium, in dem ein Programm zum Implementieren der Informationsübertragung gespeichert ist, wobei das Programm, wenn es von einem Prozessor ausgeführt wird, die Vorgänge des Paketweiterleitungsverfahrens für ein heterogenes Netzwerk nach einem der Ansprüche 1 bis 9 implementiert.

11. Proxy-Knotenvorrichtung, umfassend: einen Speicher, einen Prozessor und ein Computerprogramm, das auf dem Speicher gespeichert ist und auf dem Prozessor ablaufen kann, wobei das Computerprogramm, wenn es von dem Prozessor ausgeführt wird, die Vorgänge der Paketweiterleitungsverfahrens für ein heterogenes Netzwerk nach einem der Ansprüche 1 bis 9 implementiert.

## Revendications

1. Procédé de transfert de paquet destiné à un réseau hétérogène, exécuté par un dispositif de noeud mandataire et comprenant :
la réception d'une demande d'établissement de liaison envoyée par un client, et le transfert de la demande d'établissement de liaison à un serveur, de manière à établir une connexion entre le client et le serveur (S 101) ; et le transfert d'un paquet d'interaction entre le client et le serveur sur la base d'une pile de protocoles en mode utilisateur (S 102), dans lequel le paquet d'interaction est transféré à travers une couche de transport ;
**caractérisé en ce que**
le transfert d'un paquet d'interaction entre le client et le serveur sur la base d'une pile de protocoles en mode utilisateur comprend : la réception d'un paquet de requêtes envoyé par le client, et l'envoi d'un premier paquet de réponses au client en réponse au paquet de requêtes (S 401), dans lequel le premier paquet de réponses est un paquet d'accusés de réception ; l'ajout du paquet de requêtes à une première file d'attente tampon et le transfert du paquet de requêtes au serveur, de sorte que le serveur envoie un second paquet de réponses en réponse au paquet de requêtes (S 402) ; la réception du second paquet de réponses, et l'envoi d'un paquet d'accusés de réception au serveur sur la base du second paquet de réponses (S 403) ; l'ajout du second paquet de réponses à une seconde file d'attente tampon et l'envoi du second paquet de réponses au client (S 404).

2. Procédé de transfert de paquet destiné à un réseau hétérogène selon la revendication 1, dans lequel l'établissement d'une connexion entre le client et le serveur comprend :
la réception de la demande d'établissement de liaison envoyée par le client et le transfert de la demande d'établissement de liaison au serveur, de sorte que le serveur envoie un troisième message de réponse au client en réponse à la demande d'établissement de liaison (S 201) ;
la réception du troisième message de réponse et le transfert du troisième message de réponse au client, de sorte que le client envoie un quatrième message de réponse au serveur en réponse au troisième message de réponse (S 202) ; et
la réception du quatrième message de réponse, et le transfert du quatrième message de réponse au serveur, de manière à établir la connexion entre le client et le serveur (S 203).

3. Procédé de transfert de paquet destiné à un réseau hétérogène selon la revendication 2, dans lequel la réception de la demande d'établissement de liaison envoyée par le client et le transfert de la demande d'établissement de liaison au serveur comprennent :
la réception de la demande d'établissement de liaison envoyée par le client selon un itinéraire par défaut prédéfini ; et
la création d'une session sur la base de la demande d'établissement de liaison, et le transfert de la demande d'établissement de liaison au serveur après avoir mis à jour une adresse de la demande d'établissement de liaison.

4. Procédé de transfert de paquet destiné à un réseau hétérogène selon la revendication 3, dans lequel le contenu du message de la session comprend : un numéro de série de liaison et une taille de fenêtre.

5. Procédé de transfert de paquet destiné à un réseau hétérogène selon la revendication 1, comprenant en outre :
dans le cas où la capacité de données du second paquet de réponses dans la seconde file d'attente tampon est supérieure à un seuil, la réduction de la taille de la fenêtre du paquet de demandes envoyé au serveur, de manière à réduire le taux d'envoi de paquet du serveur.

6. Procédé de transfert de paquet destiné à un réseau hétérogène selon la revendication 1, comprenant en outre :
dans le cas où le client ne reçoit pas le second paquet de réponses dans un délai prédéterminé, l'ajout du second paquet de réponses à la seconde file d'attente tampon et l'envoi du second paquet de réponses au client.

7. Procédé de transfert de paquet destiné à un réseau hétérogène selon la revendication 1, comprenant en outre :
dans le cas où une perte de paquet est détectée au cours d'un processus d'interaction de paquet, l'ajustement d'une taille de la fenêtre du paquet d'interaction à un seuil prédéfini.

8. Procédé de transfert de paquet destiné à un réseau hétérogène selon la revendication 1, dans lequel une pile de protocoles de source ouverte de protocole de contrôle de transmission/protocole Internet, TCP/IP, de distribution de logiciel de Berkeley, BSD, est utilisée en tant que pile de protocoles en mode utilisateur.

9. Procédé de transfert de paquet destiné à un réseau hétérogène selon la revendication 1, comprenant en outre :
après avoir reçu une demande de rupture de liaison de la part du serveur, s'il y a des messages en attente dans la seconde file d'attente, le déguisement en client pour rompre la liaison avec le serveur, et ensuite la rupture de la liaison avec le client une fois que les messages dans la seconde file d'attente sont envoyés dans leur intégralité.

10. Support de stockage lisible par ordinateur, dans lequel est stocké un programme de mise en oeuvre du transfert d'informations, dans lequel le programme, lorsqu'il est exécuté par un processeur, met en oeuvre les opérations du procédé de transfert de paquet destiné à un réseau hétérogène selon l'une quelconque des revendications 1 à 9.

11. Dispositif de noeud mandataire comprenant : une mémoire, un processeur et un programme informatique qui est stocké dans la mémoire et capable de fonctionner sur le processeur, dans lequel le programme informatique, lorsqu'il est exécuté par le processeur, met en oeuvre les opérations du procédé de transfert de paquet destiné à un réseau hétérogène selon l'une quelconque des revendications 1 à 9.
